# EUROPÄISCHE PATENTSCHRIFT

(11) **EP 2 128 443 B1**
(45) Veröffentlichungstag und Bekanntmachung des Hinweises auf die Patenterteilung: **06.10.2010**
(21) Anmeldenummer: 09006152.4
(22) Anmeldetag: 06.05.2009
(51) Int. Cl.: F04B 49/035, F04B 23/02, F16N 7/38

(54) **Pumpenelement**
Pump element
Elément de pompe

(30) Priorität: 27.05.2008 WO PCT/DE2008/007146
(43) Veröffentlichungstag der Anmeldung: 02.12.2009
(73) Patentinhaber: Lincoln GmbH, 69190 Walldorf (DE)
(72) Erfinder: Paluncic, Zdravko Dr.-Ing., 67067 Ludwigshafen (DE); Schönfeld, Andreas, 68789 St. Leon-Rot (DE)
(74) Vertreter: KEIL & SCHAAFHAUSEN Patentanwälte

(56) Entgegenhaltungen:
- EP-A- 0 473 385
- DE-A1- 10 306 006
- DE-C- 843 763
- DE-U1-202007 016 788
- US-A- 5 287 833

## Beschreibung

Die Erfindung betrifft ein Pumpenelement, welches für einen Schmierstoffgeber verwendbar ist, mit einem Gehäuse, in welchem ein zylindrischer Pumpraum ausgebildet ist, in dem ein Kolben verschiebbar angeordnet ist, wobei der Pumpraum eine Einlassöffnung, eine mit einem Rückschlagventil versehene Auslassöffnung und wenigstens eine Bypassöffnung aufweist.

Derartige Pumpenelemente werden beispielsweise in Dosierpumpen von Einleitungssystemen für die Förderung von Schmierstoff verwendet. Hierbei wird durch eine solche Dosierpumpe Schmierstoff aus einem Schmierstoffbehälter einer oder mehreren Schmierstellen zugeführt. Dies erfolgt, indem der Kolben in dem zylindrischen Pumpraum hin- und herbewegt wird, wodurch Schmierstoff in den Pumpraum eingesaugt und zu den Schmierstellen gepresst wird. Der Antrieb des Kolbens erfolgt dabei üblicherweise elektrisch, pneumatisch oder hydraulisch. Bei Einleitungssystemen wird nach jedem Schmierzyklus die zu den Schmierstellen führende (Haupt-)Leitung entlastet. Die Entlastung der zu den Schmierstellen führenden Leitungen erfolgt üblicherweise über ein Zweiwege-Magnetventil. Die Druckentlastung ist damit sowohl hinsichtlich der vorzusehenden Komponenten als auch von dem Steuerungs- und Regelungsaufwand vergleichsweise aufwändig.

In der EP 0 473 385 A1 wird eine Schmiereinrichtung mit einem Pumpenelement beschrieben, bei dem durch einen Pumpenkolben mit oszillierender Bewegung Öl zu einem Verteiler geliefert wird. Durch ein mit dem Antrieb des Pumpenkolbens verbundenes, zusätzliches Ventil wird bedarfsweise ein Entlastungskanal, der die Auslassöffnung und die Einlassöffnung des Pumpenelements miteinander verbindet, geöffnet bzw. geschlossen. Aufgabe der vorliegenden Erfindung ist es demgegenüber, ein besonders einfach aufgebautes Pumpenelement bereitzustellen, welches eine zuverlässige Entlastung der zu einer Schmierstelle führenden Leitung erlaubt.

Diese Aufgabe wird erfindungsgemäß im Wesentlichen durch ein Pumpenelement mit den Merkmalen des Anspruchs 1 gelöst. Erfindungsgemäß sind die Einlassöffnung, die mit dem Rückschlagventil versehene Auslassöffnung sowie die Bypassöffnung in dem Pumpraum des Pumpenelements derart angeordnet, dass der Kolben zur Förderung von Schmierstoff durch das Rückschlagventil in die Auslassöffnung zwischen einer die Einlassöffnung freigebenden und die Bypassöffnung verschließenden ersten Position (Ansaugposition) und einer die Einlassöffnung und die Bypassöffnung verschließenden zweiten Position (Druck-Endposition) hin- und herbewegbar ist. Dabei ist der Kolben für eine Druckentlastung zwischen der Auslassöffnung und der Einlassöffnung in eine die Einlassöffnung und die Bypassöffnung freigebende dritte Position (Entlastungsendposition) über die erste Position hinaus zurückziehbar, so dass in dieser Entlastungsendposition die Auslassöffnung und die Einlassöffnung über einen das Rückschlagventil umgehenden Bypasskanal in Strömungsverbindung stehen. Mit anderen Worten ist der Kolben nicht nur, wie dies bei herkömmlichen Pumpenelementen üblich ist, zwischen der Ansaugposition und der Druck-Endposition hin- und herbewegbar, sondern der Kolben kann zusätzlich in die Druckentlastungsposition zurückgezogen werden, um den Bypasskanal freizugeben, so dass Schmiermittel aus der Auslassöffnung bzw. der hieran angeschlossenen zu einer Schmierstelle führenden Leitung in die Einlassöffnung und damit beispielsweise in einen Schmierstoffvorratsbehälter entspannen kann. Der Kolben erfüllt somit erfindungsgemäß eine Doppelfunktion, nämlich einerseits das Pumpen des Schmierstoffs und andererseits das definierte Öffnen und Verschließen der Bypassöffnung und damit des Bypasskanals. Dies führt zu einer besonders kompakten und kostengünstigen Bauweise.

Zusätzlich hierzu ist es erfindungsgemäß vorgesehen, dass dem Kolben ein Schrittmotor, insbesondere ein Linearschrittmotor, als Antrieb zugeordnet ist. Die Nutzung eines solchen Schrittmotors als Antriebsmotor für den Kolben ermöglicht eine regelbare bzw. steuerbare Bewegung des Kolbens derart, dass der Kolben ohne zusätzlichen Aufwand in die Entlastungsendposition zurückbewegt werden kann. Der Vorteil der erfindungsgemäßen Verwendung eines (Linear-)Schrittmotors als Kolbenantrieb in einem Pumpenelement liegt darin, dass für diese Entlastung keine aufwändigen weiteren Vorrichtungen, wie z.B. die aus dem Stand der Technik bekannten Zweiwege-Magnetventile, erforderlich sind.

Um zu erreichen, dass der Bypasskanal während eines Pumpenhubs zur Förderung von Schmierstoff unerwünscht geöffnet wird, ist das Pumpenelement vorzugsweise derart ausgestaltet, dass der Kolben eine Länge aufweist, welche größer ist als ein Abstand zwischen der dem Rückschlagventil zugewandten Stirnfläche des Kolbens in der zweiten Position (Druck-Endposition) und der Bypassöffnung.

Für eine kontrollierte Entlastung der dem Rückschlagventil nachgeschalteten Leitung ist es günstig, wenn der Bewegungsverlauf des Kolbens steuer- oder regelbar ist. Als Regelgröße wird beispielsweise ein Druck und/oder die Kolbenposition verwendet. Die Steuerung bzw. Regelung ist vorzugsweise so ausgestaltet, dass der Kolben in einer beliebigen Position zwischen der Entlastungsendposition und der Druck-Endposition positionierbar und dort ortsfest anhaltbar ist.

Der Schrittmotor weist nach einer bevorzugten Ausführungsform eine in axialer Bewegungsrichtung des Kolbens verschiebbare Welle auf, die mit dem Kolben in Wirkverbindung steht, um diesen zu betätigen. Dies kann insbesondere über eine unmittelbare Verbindung zwischen dem Kolben und der Welle erfolgen, beispielsweise indem der Kolben form- oder kraftschlüssig mit der Welle verbunden oder einstückig mit dieser ausgebildet ist. So kann der Kolben beispielsweise auf die Welle aufgeschraubt oder aufgerastet sein, wodurch der Schrittmotor und/oder der Kolben bei Bedarf ausgetauscht werden können, ohne die übrigen Komponenten des Pumpenelements zerlegen zu müssen.

Das der Auslassöffnung zugeordnete Rückschlagventil ist derart ausgelegt und angeordnet, dass das Rückschlagventil durch einen in den zylindrischen Pumpraum erzeugten Überdruck des Schmierstoffs öffenbar ist. Damit wird ein Zurückströmen des Schmierstoffs von der Auslassöffnung in Richtung zu der Einlassöffnung vermieden, wenn der Bypasskanal nicht definiert geöffnet wird, indem die Bypassöffnung durch den Kolben freigegeben wird.

Der Bypasskanal, der erfindungsgemäß in dem Gehäuse des Pumpenelements ausgebildet ist, ist derart gestaltet und angeordnet, dass eine Strömung des Schmierstoffs an dem Rückschlagventil vorbei ermöglicht wird. Hierzu mündet der Bypasskanal bezogen auf die Schmierstoffausstoßrichtung stromabwärts des Rückschlagventils in die Auslassöffnung oder einen Auslasskanal, d.h. eine zu den Schmierstellen führende Leitung.

Der Aufbau des erfindungsgemäßen Pumpenelements kann besonders kompakt und einfach gehalten werden, wenn die Bypassöffnung beabstandet von der Einlassöffnung auf der der Auslassöffnung abgewandten Seite in den zylindrischen Pumpraum mündet.

Alternativ hierzu ist es auch möglich, den Kolben mit einer umlaufenden Nut oder dergleichen Verjüngung zu versehen, welche in einer definierten Position des Kolbens eine Strömung aus dem Bypasskanal in die Einlassöffnung freigibt.

Erfindungsgemäß lässt sich beispielsweise ein Pumpenelement der oben beschriebenen Art zum Fördern von Schmierstoff betreiben, indem über eine Ansaugöffnung aus einer Schmierstoffversorgung in einen Zylinder eintretender Schmierstoff durch einen in dem Zylinder axial verschiebbaren Kolben in Richtung eines Ausgangs gefördert wird, indem der Kolben zur Förderung des Schmierstoffs zwischen einer Ansaugposition und einer Ausstoßposition hin- und herbewegt wird. Dabei wird der Kolben zur Druckentlastung des Ausgangs des Pumpenelements über die Ansaugposition hinaus in eine Entlastungsposition bewegt, so dass dabei eine den Zylinder überbrückende Strömungsverbindung zwischen dem Ausgang und der Schmierstoffversorgung geöffnet wird. Nach der Druckentlastung ist es vorgesehen, dass die Strömungsverbindung durch eine entgegengesetzte Bewegung des Kolbens von der Entlastungsendposition in die Ansaugposition oder darüber hinaus verschlossen wird.

Die Erfindung wird nachfolgend anhand eines Ausführungsbeispiels und unter Bezugnahme auf die Zeichnungen näher beschrieben. Die Erfindung ist jedoch nicht auf die dort dargestellte Merkmalskombination beschränkt.

Es zeigen schematisch:
- Fig. 1: ein an einen Schmierstoffbehälter angeschlossenes Pumpenelement nach der Erfindung,
- Fig. 2: das Pumpenelement nach Fig. 1 in seiner Ansaugposition,
- Fig. 3: das Pumpenelement nach Fig. 1 in seiner Druck-Endposition und
- Fig. 4: das Pumpenelement nach Fig. 1 in seiner Druckentlastungsendposi- tion.

Das in den Figuren dargestellte Pumpenelement 1 weist einen als Gehäuse dienenden Pumpenblock 2 auf, in welchem eine zylindrische Bohrung vorgesehen ist, die einen Pumpraum 3 bildet. In dem Pumpraum 3 ist ein Kolben 4, welcher in der dargestellten Ausführungsform einen im Wesentlichen über seine Länge konstanten Querschnitt aufweist, verschiebbar geführt. Die Abmessungen des Pumpraums 3 und des Kolbens 4 sind dabei derart aufeinander abgestimmt, dass der Kolben 4 im Wesentlichen dichtend in dem Pumpraum 3 verschiebbar ist.

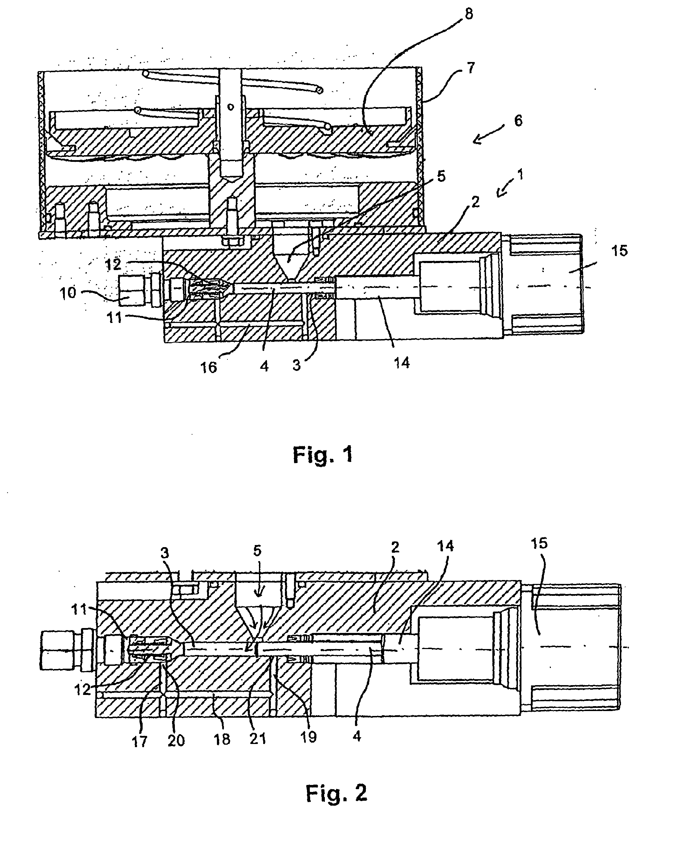

Über eine in den Pumpraum mündende Einlassöffnung 5 steht das Pumpenelement 1 mit einer Schmierstoffversorgung 6 in Verbindung. Die Schmierstoffversorgung 6 ist in der dargestellten Ausführungsform der Fig. 1 durch ein Fass oder dergleichen Behälter 7 gebildet, in welchem ein Schmierstoffvorrat aufgenommen ist. Der Behälter 7 ist in dem Ausführungsbeispiel nach Fig. 1 mit einer Folgeplatte 8 ausgestattet und ermöglicht über eine Öffnung 9 die Zufuhr von Schmierstoff in die Einlassöffnung 5 des Pumpenelements 1.

Auf der in den Figuren linken Seite des Pumpenelements 1 ist ein Auslassanschluss 10 zur Verbindung mit einer zu einer Schmierstelle führenden Leitung (nicht dargestellt) vorgesehen. Der Auslassanschluss 10 ist dabei einer Auslassöffnung 11 des zylindrischen Pumpraums 3 zugeordnet, in welcher ein Rückschlagventil 12 vorgesehen ist. Das beispielsweise federbelastete Rückschlagventil 12 ist in der dargestellten Ausführungsform derart angeordnet, dass ein in dem Pumpraum 3 unter Druck stehendes Fluid das Rückschlagventil 12 öffnen und an diesem vorbei zu dem Auslassanschluss 10 strömen kann. Dagegen wird eine Strömung in entgegengesetzter Richtung durch das Rückschlagventil 12 gesperrt.

Der Kolben 4 weist auf der dem Auslassanschluss 10 zugewandten Seite eine Stirnfläche 13 auf. Auf der gegenüberliegenden, in den Figuren rechten Seite ist der Kolben 4 mit der Welle 14 eines Linearschrittmotors 15 verbunden. Mit anderen Worten kann der Kolben 4 durch eine Betätigung des Schrittmotors 15 und damit eine axiale Verschiebung der Motorwelle 14 in dem Pumpraum 3 hin- und herbewegt werden.

Weiter ist in dem Pumpenblock 2 des Pumpenelements 1 ein Bypasskanal 16 ausgebildet, welcher die Auslassöffnung 11 mit dem Pumpraum 3 verbindet. Der Bypasskanal 16 weist dabei einen ersten, in der dargestellten Ausführungsform vertikalen Abschnitt 17, einen daran anschließenden, parallel zu dem Pumpraum 3 verlaufenden zweiten Abschnitt 18 sowie einen daran anschließenden dritten, ebenfalls vertikalen Abschnitt 19 auf. Der erste Abschnitt 17 des Bypasskanals 16 mündet über eine erste Bypassöffnung 20 derart in die Auslassöffnung 11, dass der Auslassanschluss 10 zumindest bei geschlossenem Rückschlagventil 12 mit dem Bypasskanal 16 in Strömungsverbindung steht. Eine zweite Bypassöffnung 21 des Bypasskanals 16 mündet von dem dritten Abschnitt 19 in den Pumpraum 3. Die zweite Bypassöffnung 21 ist in den Figuren nach rechts gegenüber der Einlassöffnung 5 versetzt angeordnet. Abhängig von der Position des Kolbens 4 innerhalb des Pumpraums 3 wird die zweite Bypassöffnung 21 dadurch definiert geöffnet oder verschlossen.

Unter Bezugnahme auf die Fig. 2 bis 4 wird nachfolgend die Funktionsweise des erfindungsgemäßen Pumpenelements 1 näher erläutert. Um einen Schmierstoff beispielsweise aus der Schmierstoffversorgung 6 zu einer nicht gezeigten Schmierstelle zu fördern, wird der Kolben 4 in dem Pumpraum 3 aus der in Fig. 2 gezeigten Position nach links verschoben, indem der Schrittmotor 15 betätigt wird, wodurch die Welle 14 ebenfalls nach links bewegt wird. In der in Fig. 2 gezeigten Position verschließt der Kolben 4 die zweite Bypassöffnung 21 und sperrt somit eine Strömungsverbindung zwischen dem Pumpraum 3 und der Auslassöffnung 11 über den Bypasskanal 16.

In der in Fig. 2 dargestellten Position des Kolbens 4 verschließt dieser auch die Einlassöffnung 5, so dass bei einer Bewegung des Kolbens 4 in der Figur nach links der in dem Pumpraum 3 befindliche Schmierstoff das Rückschlagventil 12 öffnet, so dass der Schmierstoff durch die Auslassöffnung 11 zu dem Auslassanschluss 10 entweichen kann.

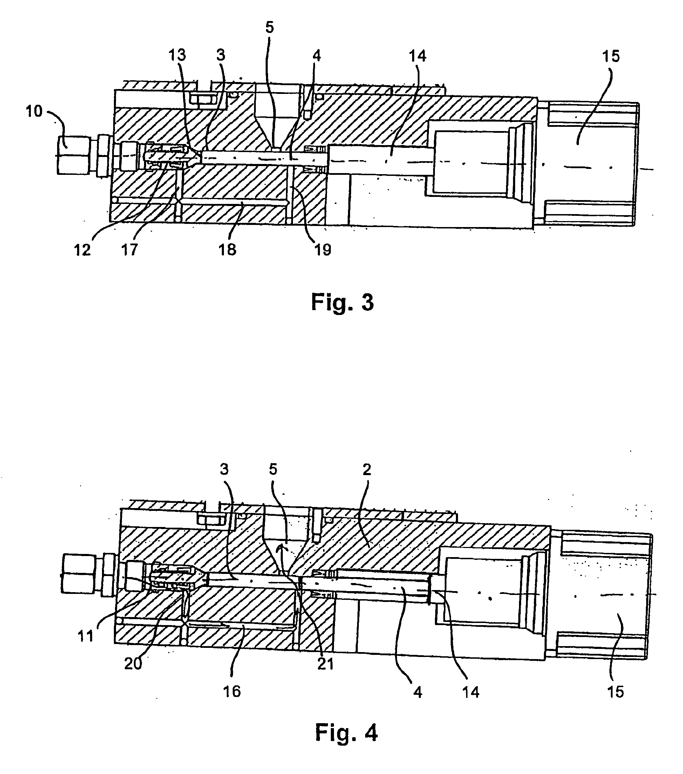

In der in Fig. 3 dargestellten Position befindet sich der Kolben 4 in seiner maximal nach links bewegten Stellung. Nach dem Austritt des Schmierstoffs schließt sich das Rückschlagventil 12 wieder. Wird nun der Kolben 4 durch erneute Betätigung des Schrittmotors 15 zurückbewegt, d.h. in den Figuren nach rechts, entsteht in dem Pumpraum 3 ein Unterdruck. Sobald die Stirnfläche 13 des Kolbens 4 die Einlassöffnung 5 passiert, wird Schmierstoff in den Pumpraum 3 eingesaugt. Das Rückschlagventil 12 bleibt dabei verschlossen.

Wenn nun der Kolben 4, wie in Fig. 4 dargestellt, weiter nach rechts zurückgezogen wird, gibt der Kolben 4 auch die zweite Bypassöffnung 21 frei, so dass eine Strömungsverbindung zwischen dem Pumpraum 3 und der Auslassöffnung 11 über den Bypasskanal 16 hergestellt wird. Auf diese Weise kann eine Druckentlastung in der zu den Schmierstellen führenden Leitung (nicht gezeigt) erreicht werden. Durch erneutes Vorschieben des Kolbens 4 in den Figuren nach links kann ein neuer Pumpzyklus gestartet werden.

Wie insbesondere aus der Ansicht der Fig. 3 ersichtlich ist, weist der Kolben 4 über seine gesamte Länge, d.h. zwischen der Stirnfläche 13 und dem mit der Welle 14 verbundenen Ende einen im Wesentlichen konstanten Querschnitt auf. Dabei ist diese Länge des Kolbens 4 größer als der Abstand zwischen der Stirnfläche 13 des Kolbens 4 und der zweiten Bypassöffnung 21, wenn sich der Kolben 4 in seiner in Fig. 3 gezeigten Position befindet. Hierdurch wird verhindert, dass sich während des Ausstoßens von Schmierstoff ungewollt der Bypasskanal 16 öffnet.

### Bezugszeichenliste:

- 1: Pumpenelement
- 2: Pumpenblock
- 3: zylindrischer Pumpraum
- 4: Kolben
- 5: Einlassöffnung
- 6: Schmierstoffversorgung
- 7: Behälter
- 8: Folgeplatte
- 9: Öffnung
- 10: Auslassanschluss
- 11: Auslassöffnung
- 12: Rückschlagventil
- 13: Stirnfläche des Kolbens 4
- 14: Welle
- 15: Schrittmotor
- 16: Bypasskanal
- 17: erster Abschnitt des Bypasskanals
- 18: zweiter Abschnitt des Bypasskanals
- 19: dritter Abschnitt des Bypasskanals
- 20: erste Bypassöffnung
- 21: zweite Bypassöffnung

## Patentansprüche

1. Pumpenelement, insbesondere für einen Schmierstoffgeber, mit einem Gehäuse, in welchem ein zylindrischer Pumpraum (3) ausgebildet ist, in dem ein Kolben (4) verschiebbar angeordnet ist, wobei der Pumpraum (3) eine Einlassöffnung (5), eine mit einem Rückschlagventil (12) versehene Auslassöffnung (11) und wenigstens eine Bypassöffnung (21) aufweist, die derart angeordnet sind, dass der Kolben (4) zur Förderung von Schmierstoff durch das Rückschlagventil (12) in die Auslassöffnung (11) zwischen einer die Einlassöffnung (5) freigebenden und die Bypassöffnung (21) verschließenden ersten Position und einer die Einlassöffnung (5) und die Bypassöffnung (21) verschließenden zweiten Position hin und her bewegbar ist und für eine Druckentlastung zwischen der Auslassöffnung (11) und der Einlassöffnung (5) über die erste Position hinaus in eine die Einlassöffnung (5) und die Bypassöffnung (21) freigebende Entlastungsendposition zurückziehbar ist, so dass in der Entlastungsendposition die Auslassöffnung (11) und die Einlassöffnung (5) über einen das Rückschlagventil (12) umgehenden Bypasskanal (16) in Strömungsverbindung stehen.

2. Pumpenelement, nach Anspruch 1, **dadurch gekennzeichnet, dass** dem Kolben (4) ein Schrittmotor (15), insbesondere ein Linearschrittmotor, als Antrieb zugeordnet ist.

3. Pumpenelement nach Anspruch 1 oder 2, **dadurch gekennzeichnet, dass** der Kolben (4) eine Länge aufweist, welche größer ist als ein Abstand zwischen der dem Rückschlagventil (12) zugewandten Stirnfläche (13) des Kolbens (4) in der zweiten Position und der Bypassöffnung (21).

4. Pumpenelement nach einem der vorhergehenden Ansprüche, **dadurch gekennzeichnet, dass** ein Bewegungsverlauf des Kolbens (4) steuer- oder regelbar ist.

5. Pumpenelement nach einem der vorhergehenden Ansprüche, **dadurch gekennzeichnet, dass** der Kolben (4) mit einer in axialer Bewegungsrichtung des Kolbens verschiebbaren Welle (14) des Schrittmotors (15) in Wirkverbindung steht.

6. Pumpenelement nach Anspruch 5, **dadurch gekennzeichnet, dass** der Kolben (4) form- oder kraftschlüssig oder einstückig mit der Welle (14) verbunden ist.

7. Pumpenelement nach einem der vorhergehenden Ansprüche, **dadurch gekennzeichnet, dass** das Rückschlagventil (12) derart ausgelegt ist, dass dieses durch einen in dem zylindrischen Pumpraum (3) erzeugten Überdruck des Schmierstoffes öffenbar ist.

8. Pumpenelement nach Anspruch 7, **dadurch gekennzeichnet, dass** der Bypasskanal (16) bezogen auf die Schmierstoff-Ausstoßrichtung stromabwärts des Rückschlagventils (12) in die Auslassöffnung (11) oder einen Auslasskanal mündet.

9. Pumpenelement nach einem der vorhergehenden Ansprüche, **dadurch gekennzeichnet, dass** die Bypassöffnung (21) beabstandet von der Einlassöffnung (5) auf der der Auslassöffnung (11) abgewandten Seite in den zylindrischen Pumpraum (3) mündet.

## Claims

1. Pump element, in particular for a lubricant dispenser, with a housing in which a cylindrical pump chamber (3) is formed, in which a piston (4) is arranged in a displaceable manner, wherein the pump chamber (3) has an inlet opening (5), an outlet opening (11) which is provided with a non-return valve (12) and at least one bypass opening (21), which are arranged in such a manner that the piston (4) can be moved to and fro between a first position which opens the inlet opening (5) and closes the bypass opening (21) and a second position which closes the inlet opening (5) and the bypass opening (21) in order to conduct lubricant through the non-return valve (12) into the outlet opening (11) and can be retracted beyond the first position into a load-relieving end position which opens the inlet opening (5) and the bypass opening (21) for pressure relief between the outlet opening (11) and the inlet opening (5), so that in the load-relieving end position there is a flow connection between the outlet opening (11) and the inlet opening (5) via a bypass duct (16) which bypasses the non-return valve (12).

2. Pump element according to Claim 1, **characterised in that** a stepping motor (15), in particular a linear stepping motor, is assigned to the piston (4) as the drive.

3. Pump element according to Claim 1 or 2, **characterised in that** the piston (4) has a length which is greater than a distance between the end face (13), which faces the non-return valve (12), of the piston (4) in the second position and the bypass opening (21).

4. Pump element according to one of the preceding claims, **characterised in that** a movement profile of the piston (4) can be controlled or regulated.

5. Pump element according to one of the preceding claims, **characterised in that** the piston (4) is functionally connected to a shaft (14), which can be displaced in the axial movement direction of the piston, of the stepping motor (15).

6. Pump element according to Claim 5, **characterised in that** the piston (4) is connected in a form- or force-fitting manner or in one piece to the shaft (14).

7. Pump element according to one of the preceding claims, **characterised in that** the non-return valve (12) is configured in such a manner that it can be opened by an overpressure, which is produced in the cylindrical pump chamber (3), of the lubricant.

8. Pump element according to Claim 7, **characterised in that** the bypass duct (16) opens into the outlet opening (11) or an outlet duct downstream of the non-return valve (12) in relation to the lubricant output direction.

9. Pump element according to one of the preceding claims, **characterised in that** the bypass opening (21) opens into the cylindrical pump chamber (3) on the side facing away from the outlet opening (11) at a distance from the inlet opening (5).

## Revendications

1. Elément de pompe, en particulier pour un distributeur de lubrifiant, doté d'un boîtier, dans lequel est conçu un espace de pompage (3) cylindrique, dans lequel un piston (4) est disposé de façon coulissante, l'espace de pompage (3) présentant une ouverture d'entrée (5), une ouverture de sortie (11) dotée d'un clapet anti-retour (12) et au moins une ouverture de dérivation (21), qui est disposée de telle sorte que le piston (4) peut être déplacé d'un côté et de l'autre pour le transport du lubrifiant par le clapet anti-retour (12) dans l'ouverture de sortie (11) entre une première position libérant l'ouverture d'entrée (5) et fermant l'ouverture de dérivation (21) et une seconde position fermant l'ouverture d'entrée (5) et l'ouverture de dérivation (21) et peut être reculé pour une décharge de pression entre l'ouverture de sortie (11) et l'ouverture d'entrée (5) au-delà de la première position dans une position finale de décharge libérant l'ouverture d'entrée (5) et l'ouverture de dérivation (21), de sorte que, dans la position finale de décharge, l'ouverture de sortie (11) et l'ouverture d'entrée (5) sont en liaison d'écoulement au moyen d'un canal de dérivation (16) entourant le clapet anti-retour (12).

2. Elément de pompe selon la revendication 1, **caractérisé en ce qu'**un moteur pas à pas (15), en particulier un moteur pas à pas linéaire, est attribué comme entraînement au piston (4).

3. Elément de pompe selon la revendication 1 ou 2, **caractérisé en ce que** le piston (4) présente une longueur qui est supérieure à une distance entre la face frontale (13), tournée vers le clapet anti-retour (12), du piston (4) dans la seconde position et l'ouverture de dérivation (21).

4. Elément de pompe selon l'une quelconque des revendications précédentes, **caractérisé en ce qu'**une courbe de déplacement du piston (4) peut être commandée ou réglée.

5. Elément de pompe selon l'une quelconque des revendications précédentes, **caractérisé en ce que** le piston (4) est en liaison active avec un arbre (14), coulissant dans le sens de déplacement axial du piston, du moteur pas à pas (15).

6. Elément de pompe selon la revendication 5, **caractérisé en ce que** le piston (4) est relié à l'arbre (14) par complémentarité de formes ou par adhérence ou d'une seule pièce.

7. Elément de pompe selon l'une quelconque des revendications précédentes, **caractérisé en ce que** le clapet anti-retour (12) est conçu de telle sorte que celui-ci peut être ouvert par une surpression du lubrifiant qui est générée dans l'espace de pompage (3) cylindrique.

8. Elément de pompe selon la revendication 7, **caractérisé en ce que** le canal de dérivation (16) débouche par rapport au sens d'éjection du lubrifiant en aval du clapet anti-retour (12) dans l'ouverture de sortie (11) ou dans un canal de sortie.

9. Elément de pompe selon l'une quelconque des revendications précédentes, **caractérisé en ce que** l'ouverture de dérivation (21) débouche à distance de l'ouverture d'entrée (5) sur le côté opposé à l'ouverture de sortie (11) dans l'espace de pompage (3) cylindrique.
